# EUROPEAN PATENT SPECIFICATION

(11) **EP 3 367 653 B1**
(45) Date of publication and mention of the grant of the patent: **09.10.2019**
(21) Application number: 18155291.0
(22) Date of filing: 06.02.2018
(51) Int. Cl.: H04M 11/02, H04N 7/18

(54) **LOBBY INTERPHONE, DOORPHONE SYSTEM, AND COMMUNICATION METHOD**
EMPFANGSBEREICHSGEGENSPRECHANLAGE, TÜRGEGENSPRECHANLAGE UND KOMMUNIKATIONSVERFAHREN
INTERPHONE DE SALLE D'ATTENTE, SYSTÈME DE PORTIER TÉLÉPHONIQUE ET PROCÉDÉ DE COMMUNICATION

(30) Priority: 27.02.2017 JP 2017035152
(43) Date of publication of application: 29.08.2018
(73) Proprietor: Panasonic Intellectual Property Management Co., Ltd., Osaka-shi, Osaka 540-6207 (JP)
(72) Inventor: SHIMADA, Taku, Osaka, 540-6207 (JP); KAWASAKI, Naoto, Osaka, 540-6207 (JP); KODAMA, Tayuto, Osaka, 540-6207 (JP); YOSHIDOME, Seiichi, Osaka, 540-6207 (JP); NODA, Hiroshi, Osaka, 540-6207 (JP); YAMADA, Satoshi, Osaka, 540-6207 (JP)
(74) Representative: Eisenführ Speiser

(56) References cited:
- EP-A1- 2 533 503
- WO-A1-2008/109909
- WO-A1-2013/159292
- ES-A1- 2 315 138

## Description

### BACKGROUND

### 1. Technical Field

The present disclosure relates to a lobby interphone, a doorphone system and a communication method.

### 2. Description of the Related Art

A doorphone system consisting of a slave device installed at the entrance outside a house and a master device inside the house is widely used. Generally, in the doorphone system, the slave device and the master device are connected with each other by an existing two-wire cable for low cost and simple installation. Japanese Patent Unexamined Publication No. 9-154128 (PTL 1) discloses a star-type doorphone system in which one master device is connected to each of a plurality of slave devices via two-wire cables.

In addition, in recent years, a doorphone system for an apartment houses such as a condominium and the like has also become popular. Japanese Patent Unexamined Publication No. 2015-053740 (PTL 2) discloses a doorphone system with daisy chain type wiring, which includes a lobby interphone installed at the common entrance of an apartment house for a visitor to call the residents of a visiting place, a monitor installed at each dwelling unit for the residents to respond by receiving a call from the lobby interphone, and a distributor connected to the lobby interphone via a two-wire cable of a common part and connected to the monitor via a two-wire cable of each dwelling unit (for example, PTL 1 and PTL 2).

However, in the doorway system in the related art for the apartment house, the lobby interphone is either connected to a monitor with star-type wiring or connected to one of the distributors with daisy chain type wiring, thus existing wiring may be sufficiently used.

ES 2 315 138 A1 provides a video door entry system with power, audio, video and data transmission on two-wire lines. It has one or more street panels connectable to a plurality of housing terminals. In the corresponding connection, only two non-polarized wires are used at all points of the installation, at least feeding through them, two audio channels, a video channel and a bidirectional data channel; a carrier frequency is used in each of these channels and the corresponding signals are transmitted with a frequency modulation.

WO 2013/159292 A1 discloses a dual-channel analog door entry system and a method thereof. The dual-channel analog door entry system comprises two cables connected between the building gateway and the floor distributors, configured to transmit audio and/or video signals between the outdoor stations and indoor phones; the building gateway, configured to receive a call request from at least one of the outdoor stations, identify and assign an available cable as an intercom channel, send the call request to each of the floor distributors via the intercom channel, and switch the audio and/or video signals from the outdoor station to the available cable; at least one of floor distributors, configured to receive and forward the call request to a desired indoor phone, receive a call response from the desired indoor phone if the desired indoor phone is available, and switch the audio and/or video signals from the available cable to the desired indoor phone.

WO 2008/109909 A1 discloses a digital electronic system for colour video intercom and control of access points in a complex; said system comprising; (a) at least one access point intercom interface unit, (b) at least one digital data switch or router in communication with said access point intercom interface unit, (c) a plurality of remote intercom interface units distributed through said complex; each of said remote intercom interface units in communication with one said at least one switch, or router.

EP 2 533 503 A1 discloses a communication method for a telecommunications assembly, in particular for a domestic intercom system, and a domestic intercom system. The method involves sending a call request i.e. acoustic and/or visual call request, directed to a subscriber group e.g. office unit, by a calling subscriber. The call request from a central controller is forwarded to subscriber terminals of the subscriber group in a form of internet protocol-address based call request. A vision-protected communication link is established between the calling subscriber and one subscriber terminal of the group accepting the call request. The call request is sent by the calling subscriber during unicast or multicast operation. The subscriber terminals are formed as a video home telephone, a video free intercom, a virtual video home telephone and a floor door speech system. An independent claim is also included for a home communication system.

### SUMMARY

The present disclosure is to provide a lobby interphone, a doorphone system, and a communication method capable of selecting an optimum device arrangement according to the state of existing wiring.

The lobby interphone of the present disclosure is a lobby interphone of a doorphone system including the lobby interphone for a visitor to an apartment house to call residents of visiting places, room monitors for the residents to respond by receiving a call from the visitor, and distributors that relay between the lobby interphone and the room monitors, in which the lobby interphone is connected to a plurality of the room monitors with star-type wiring via two-wire cables and connected to one of the distributors via a two-wire cable, the distributors are connected to each other with daisy chain type wiring via two-wire cables, each of the distributors is connected to the room monitors via two-wire cables, the lobby interphone including a first terminal that is connected to one of the distributors, a plurality of second terminals that are connected with a plurality of the room monitors with star-type wiring, a storage that associates key numbers allocated to the room monitors connected to the distributors with a number of the first terminal and stores the key numbers allocated to the room monitors connected to each of the second terminals in association with numbers of each of the second terminals, a first relay unit that opens and closes a communication path with the distributors via the first terminal, a second relay unit that opens and closes a communication path with the room monitors via any one of the second terminals, and a controller that controls the first relay unit and the second relay unit so that a communication path with the distributor or the room monitor connected to a terminal of which the number is associated with a key number included in an input signal is opened.

The doorphone system of the present disclosure includes a lobby interphone for a visitor to an apartment house to call residents of visiting places, room monitors for the residents to respond by receiving a call from the visitor; and distributors that relay between the lobby interphone and the room monitors, in which the lobby interphone is connected to a plurality of the room monitors with star-type wiring via a two-wire cable and connected to one of the distributors via a two-wire cable, the distributors are connected to each other with daisy chain type wiring via a two-wire cable, the lobby interphone stores key numbers allocated to room monitors connected to the distributors and a key number allocated to a room monitor connected to an own device, respectively, a communication path with the room monitor is opened in a case where a room monitor of a key number included in an input signal is connected to the own device, and a communication path with the distributor is opened in a case where the room monitor of the key number included in the input signal is connected to the distributor.

A communication method of the present disclosure is a communication method of a lobby interphone of a doorphone system including a lobby interphone for a visitor to an apartment house to call residents of visiting places, room monitors for the residents to respond by receiving a call from the visitor, and distributors that relay between the lobby interphone and the room monitors, in which the lobby interphone is connected to a plurality of the room monitors with star-type wiring via two-wire cables and connected to one of the distributors via a two-wire cable, the distributors are connected to each other with daisy chain type wiring via two-wire cables, and each of the distributors is connected to the room monitors via two-wire cables, the method including determining whether a room monitor with a key number included in an input signal is connected to the distributor or to an own device, opening a communication path with a room monitor in a case where a room monitor with the key number included in an input signal is connected to the own device, and opening a communication path with the distributor in a case where the room monitor with the key number included in the input signal is connected to the distributor.

According to the present disclosure, hybrid-type wiring that combines the star-type wiring and the daisy chain type wiring becomes possible, thus in the doorphone system for the apartment house, it is possible to select optimum device arrangement according to the state of the existing wiring.

### BRIEF DESCRIPTION OF THE DRAWINGS

FIG. 1 is a system configuration diagram showing a configuration of a doorphone system according to an exemplary embodiment of the present disclosure;
FIG. 2 is a block diagram showing a configuration of a lobby interphone according to the exemplary embodiment of the present disclosure;
FIG. 3 is a diagram showing an example of a button arrangement of the lobby interphone according to the exemplary embodiment of the present disclosure;
FIG. 4 is a diagram showing an example of a table stored in a connection destination storage of the lobby interphone according to the exemplary embodiment of the present disclosure;
FIG. 5 is a block diagram showing a configuration of a room monitor according to the exemplary embodiment of the present disclosure;
FIG. 6 is a block diagram showing a configuration of a distributor according to the exemplary embodiment of the present disclosure;
FIG. 7 is a diagram showing an example of the table stored in the connection destination storage of the distributor according to the exemplary embodiment of the present disclosure;
FIG. 8 is a flowchart showing a flow of relay control of the lobby interphone according to the embodiment of the present disclosure; and
FIG. 9 is a flowchart showing a flow of relay control of the distributor according to the embodiment of the present disclosure.

### DETAILED DESCRIPTION

Hereinafter, an exemplary embodiment of the present disclosure will be described in detail with reference to drawings as appropriate. However, detailed explanation may be omitted more than necessary. For example, there are cases where a detailed description of well-known matters and redundant description on substantially the same configuration may be omitted. This is for avoiding unnecessary redundancy of the following description and facilitating understanding by those skilled in the art.

The accompanying drawings and the following description are provided to enable those skilled in the art to fully understand the present disclosure and are not intended to limit the claimed subject matters.

### <Outline of System>

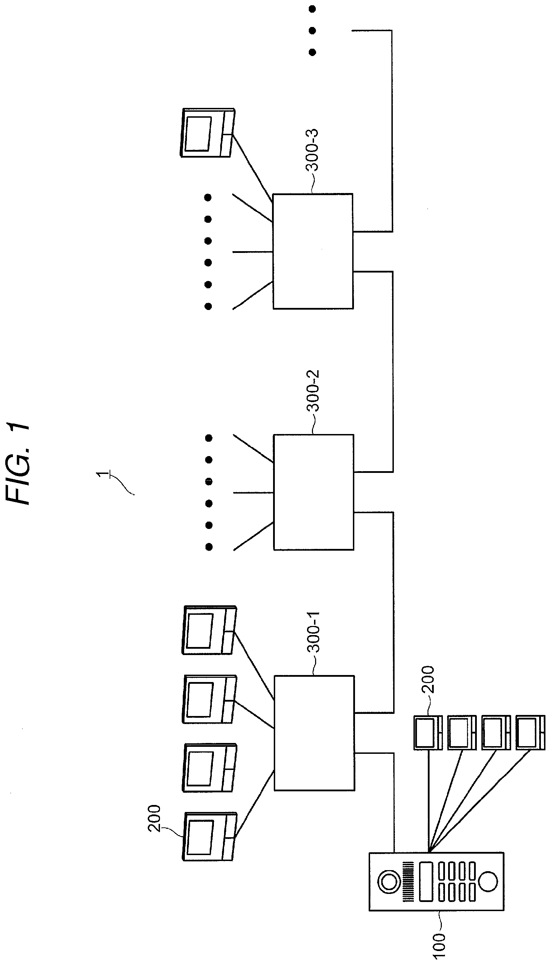

First, an outline of a doorphone system according to an exemplary embodiment of the present disclosure will be described with reference to FIG. 1. As shown in FIG. 1, doorphone system 1 consists of lobby interphone 100, room monitor 200, and distributor 300. Lobby interphone 100 is a device used by a visitor of an apartment house to call the residents of a visiting place and is installed in the common entrance (lobby) on the first floor of the apartment house building. Room monitor 200 is a device for a resident to respond by receiving a call from a visitor and is installed in each room (or each dwelling unit). Distributor 300 is a device that relays between lobby interphone 100 and room monitor 200 and is installed on each floor of the building.

Lobby interphone 100 is connected to one distributor 300-1 via a two-wire cable. In addition, lobby interphone 100 may be connected to each of the plurality of room monitors 200 with star-type wiring via two-wire cables.

Distributors 300 are connected to each other with daisy chain type wiring via two-wire cables. Specifically, distributor 300-1 is connected to lobby interphone 100 at a preceding stage and distributor 300-2 at a subsequent stage. Another distributor 300-i (i is an integer of 2 or more) is connected to distributor 300-i-1 at the preceding stage and the distributor 300-i+1 at the subsequent stage. In addition, each distributor 300 is connected to each of the plurality of room monitors 200 with star-type wiring via two-wire cables.

Lobby interphone 100 transmits a video signal and an audio signal to room monitor 200 of a communicating counterpart. Each room monitor 200 transmits an audio signal to lobby interphone 100. In addition, each room monitor 200 controls a camera of lobby interphone 100. In a case where distributor 300 exists between lobby interphone 100 and room monitor 200 of the communicating counterpart, distributor 300 relays signals transmitted and received between lobby interphone 100 and room monitor 200.

### <Configuration of Lobby Interphone>

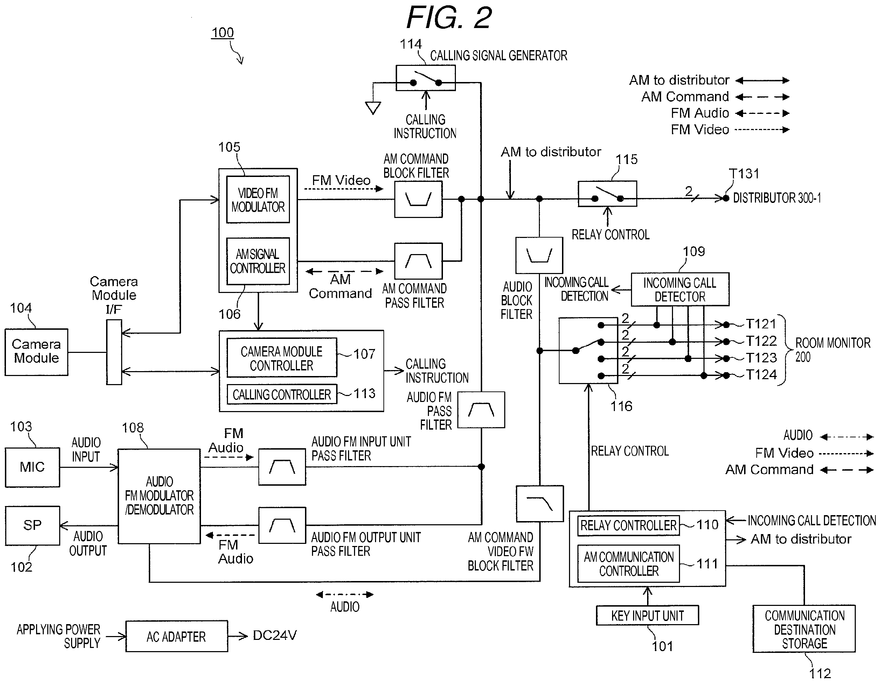

Next, the configuration of lobby interphone 100 will be described with reference to FIG. 2. In FIG. 2, lobby interphone 100 includes four terminals T121, T122, T123, and T124 for connection with room monitor 200 and may be connected simultaneously with up to four room monitors 200. In addition, lobby interphone 100 includes terminal T131 for connection with distributor 300-1.

As shown in FIG. 2, lobby interphone 100 mainly includes key input unit 101, speaker 102, microphone 103, camera unit 104, video FM modulator 105, AM signal controller 106, camera module controller 107, audio FM modulator/demodulator 108, incoming call detector 109, relay controller 110, AM communication controller 111, communication destination storage 112, calling controller 113, calling signal generator 114, first relay 115, and second relay 116.

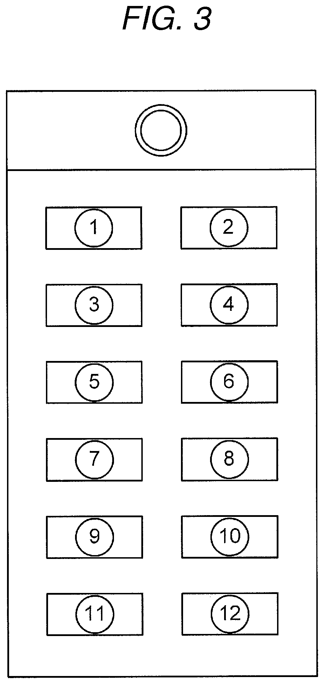

As shown in FIG. 3, key input unit 101 has various buttons including key number allocated to each room monitor 200 and outputs a signal indicating a key number and a call instruction signal corresponding to a button operation to relay controller 110.

Speaker 102 converts the analog audio data output from audio FM modulator/demodulator 108 into audio to output the audio. Microphone 103 collects ambient audio, converts the audio into analog audio data, and outputs the audio to audio FM modulator/demodulator 108.

Camera unit 104 includes an image sensor, captures video, generates video data, and outputs the video data to FM modulator 105.

Video FM modulator 105 obtains an FM video signal by performing FM modulation on the video data captured by camera unit 104. The FM video signal (FM Video) is transmitted to room monitor 200 or distributor 300.

AM signal controller 106 performs AM modulation on each piece of parameter control data transmitted and received with room monitor 200 or distributor 300 to obtain an AM control signal. The AM control signal (AM Command) is transmitted to room monitor 200 or distributor 300.

Camera module controller 107 controls the imaging range, backlight correction, and the like in camera unit 104 based on the control data output from AM signal controller 106.

Audio FM modulator/demodulator 108 performs FM modulation on the analog audio data output from microphone 103 to obtain an FM uplink audio signal. The FM uplink audio signal (FM Audio) is transmitted to distributor 300. In addition, audio FM modulator/demodulator 108 demodulates the FM downlink audio signal received from distributor 300 to output the analog audio data to speaker 102. Audio FM modulator/demodulator 108 does not perform FM modulation on the analog audio data to be transmitted toward room monitor 200 connected to lobby interphone 100 and outputs the analog audio data as it is.

Incoming call detector 109 detects a monitor incoming call output from room monitor 200 or distributor 300. Then, incoming call detector 109 outputs an incoming call detection signal indicating that a monitor incoming call has been detected to relay controller 110.

In the case of inputting a signal indicating a key number and a call instruction signal, relay controller 110 controls first relay 115 and second relay 116 according to the route to room monitor 200 of the communicating counterpart (whether via distributor 300 or not). In addition, in the case of inputting an incoming call detection signal from incoming call detector 109, relay controller 110 controls second relay 116. Details of the control of relay controller 110 will be described later.

AM communication controller 111 generates incoming data to distributor 300. The incoming data includes information indicating a key number obtained from key input unit 101. AM communication controller 111 performs AM modulation on the incoming data to obtain an AM incoming signal. The AM incoming signal (AM to distributor) is transmitted from terminal T131 to distributor 300.

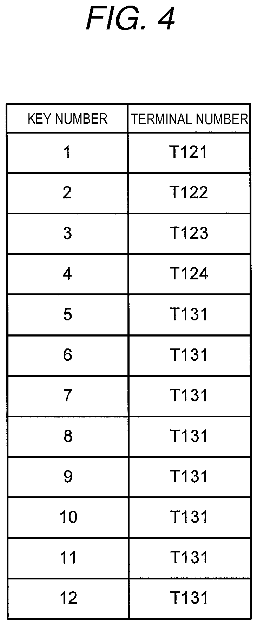

As shown in FIG. 4, communication destination storage 112 stores key numbers and terminal numbers in association with each other. A key number is not limited to a one-to-one correspondence with a physical key as shown in FIG. 3, but may be a number corresponding to a combination of a plurality of keys such as a room number, for example. In addition, the correspondence between key numbers and terminal numbers may be direct or indirect. For example, the key numbers may be stored so that the correspondence between the key numbers and the terminal numbers is performed via a separate identification number.

Calling controller 113 outputs a calling instruction signal to calling signal generator 114 at the timing of calling.

When inputting the calling instruction signal, calling signal generator 114 transmits a calling signal to room monitor 200 of the communicating counterpart by connecting the switch and short-circuits the DC voltage between the two wires (for example, 0 V).

First relay 115 switches connection/disconnection under the control of relay controller 110. At the time of the initial setting, first relay 115 is disconnected (normally open type).

Second relay 116 switches connection destinations under the control of relay controller 110. At the time of the initial setting, second relay 116 is disconnected.

In lobby interphone 100, an AC voltage of a commercial power supply is converted into a constant DC voltage (for example, DC 24 V) by an AC adapter and supplied to each unit.

### <Configuration of Room Monitor>

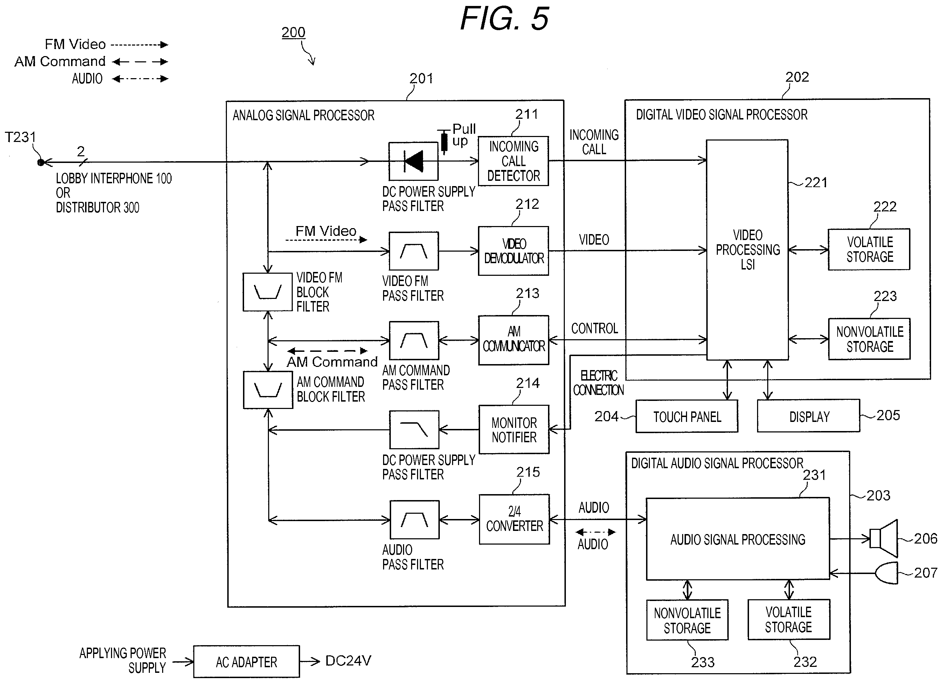

Next, the configuration of room monitor 200 will be described with reference to FIG. 5. Room monitor 200 includes lobby interphone 100 or terminal T231 for connection with distributor 300.

As shown in FIG. 5, room monitor 200 mainly includes analog signal processor 201, digital video signal processor 202, digital audio signal processor 203, touch panel 204, display 205, speaker 206, and microphone 207.

Analog signal processor 201 performs analog signal processing and includes incoming call detector 211, video demodulator 212, AM communicator 213, monitor notifier 214, and 2/4 converter 215.

Digital video signal processor 202 performs digital signal processing related to video and includes image processing large-scale integration (LSI) 221, volatile storage 222, and nonvolatile storage 223.

Digital audio signal processor 203 performs digital signal processing related to audio and includes audio signal processor 231, volatile storage 232, and nonvolatile storage 233.

Touch panel 204 outputs a user instruction based on the touch operation by a user to image processing LSI 221. Display 205 displays the image data generated by image processing LSI 221 on a screen.

Speaker 206 converts the analog audio data output from audio signal processor 231 into audio to output the audio. Microphone 207 collects ambient audio, converts the audio into analog audio data, and outputs the analog audio data to audio signal processor 231.

Incoming call detector 211 detects an incoming call from lobby interphone 100 or distributor 300. Then, incoming call detector 211 outputs an incoming call detection signal indicating that an incoming call has been detected to image processing LSI 221.

Video demodulator 212 demodulates the FM video signal transmitted from lobby interphone 100 or distributor 300 and outputs the video data to image processing LSI 221.

AM communicator 213 demodulates the video related AM control signal (AM Command) transmitted from lobby interphone 100 or distributor 300 and outputs the parameter control data to image processing LSI 221. In addition, AM communicator 213 performs AM modulation on the video-related parameter control data output from image processing LSI 221 to obtain an AM control signal. The AM control signal (AM Command) is transmitted to lobby interphone 100 or distributor 300.

In the case of receiving a monitor request from image processing LSI 221, monitor notifier 214 transmits the monitor request to lobby interphone 100 or distributor 300.

2/4 converter 215 performs 2-wire/4-wire conversion of an audio circuit. The analog audio data transmitted from lobby interphone 100 or distributor 300 is input to audio signal processor 231 via 2/4 converter 215. In addition, the analog audio data output from audio signal processor 231 is transmitted to lobby interphone 100 or distributor 300 via 2/4 converter 215.

Image processing LSI 221 performs video processing on the video data for displaying the video on the LCD screen of display 205 on the screen and performs circuit control based on each control command. In addition, in a case where the user's monitor request is input from touch panel 204, image processing LSI 221 supplies power to monitor notifier 214.

Volatile storage 222 is used by image processing LSI 221 as a work area for executing various programs. Nonvolatile storage 223 stores various application programs or various kinds of software executed by image processing LSI 221 in advance.

Audio signal processor 231 performs filtering processing or amplification processing on the analog audio data output from 2/4 converter 215 and outputs the result to speaker 206. In addition, audio signal processor 231 performs filtering processing or amplification processing on the analog audio data output from microphone 207 and outputs the result to 2/4 converter 215.

Volatile storage 232 is used by audio signal processor 231 as a work area for executing various programs. Nonvolatile storage 233 stores various application programs or various kinds of software executed by the audio signal processor 231 in advance.

In room monitor 200, an AC voltage of a commercial power supply is converted into a constant DC voltage (for example, DC 24 V) by an AC adapter and supplied to each unit.

### <Configuration of distributor>

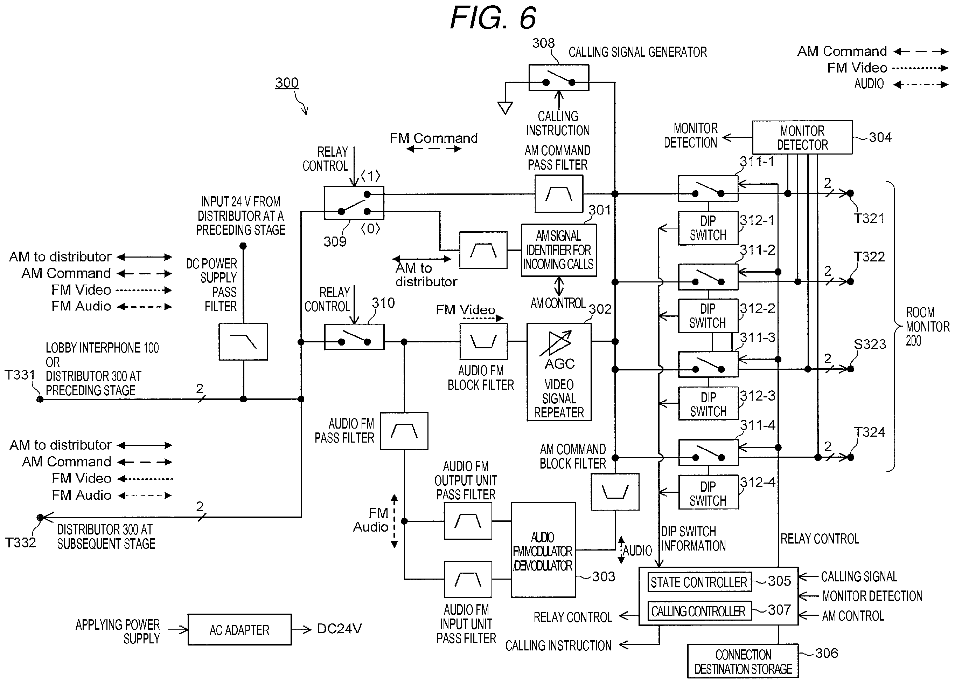

Next, the configuration of distributor 300 will be described with reference to FIG. 6. FIG. 6 shows a case in which distributor 300 includes four terminals T321, T322, T323, and T324 for connection with room monitor 200 and may be connected simultaneously with up to four room monitors 200, and communicating with one of terminals. In addition, distributor 300 includes terminal T331 for connection with lobby interphone 100 or distributor 300 at the preceding stage, and a terminal T 332 for connection with distributor 300 at the subsequent stage.

As shown in FIG. 6, distributor 300 includes AM signal identifier for incoming calls 301, video signal repeater 302, audio FM modulator/demodulator 303, monitor detector 304, state controller 305, connection destination storage 306, calling controller 307, calling signal generator 308, first relay 309, second relay 310, third relay 311, and Dual In-line Package (DIP) switch 312. Third relay 311 and DIP switch 312 are provided with the number of room monitors 200 to be connected ("4" in FIG. 6).

When receiving an incoming call from lobby interphone 100 or distributor 300 at the preceding stage, AM signal identifier for incoming calls 301 determines the content of the AM incoming signal (AM to distributor). Then, AM signal identifier for incoming calls 301 outputs a signal indicating the key number operated on lobby interphone 100 to state controller 305.

Video signal repeater 302 amplifies the FM video signal when the FM video signal (FM Video) received from lobby interphone 100 is attenuated in the two-wire cable. The FM video signal is transmitted to room monitor 200 via third relay 311.

Audio FM modulator/demodulator 303 performs FM modulation on the analog audio data transmitted from room monitor 200 to obtain an FM downlink audio signal. The FM downlink audio signal (FM Audio) is transmitted to lobby interphone 100. In addition, audio FM modulator/demodulator 303 demodulates the FM uplink audio signal received from lobby interphone 100 to obtain analog audio data. The analog audio data is transmitted to room monitor 200 via third relay 311.

Monitor detector 304 detects a monitor request from room monitor 200. Then, monitor detector 304 outputs a monitor detection signal indicating that a monitor request has been detected to state controller 305.

State controller 305 controls first relay 309, second relay 310, and third relay 311 based on the comparison result between the key number output from AM signal identifier for incoming calls 301 and the key number stored in connection destination storage 306. In addition, state controller 305 controls first relay 309, second relay 310, and third relay 311 in a case where a monitor detection signal is input from monitor detector 304. Details of the control of state controller 305 will be described later.

Each time state controller 305 receives a calling signal from lobby interphone 100, state controller 305 reads the setting of the DIP switch and determines whether or not calling room monitor 200 is connected. Then, in a case where calling room monitor 200 is connected, state controller 305 connects third relay 311 connected to the DIP switch in order to open a communication path.

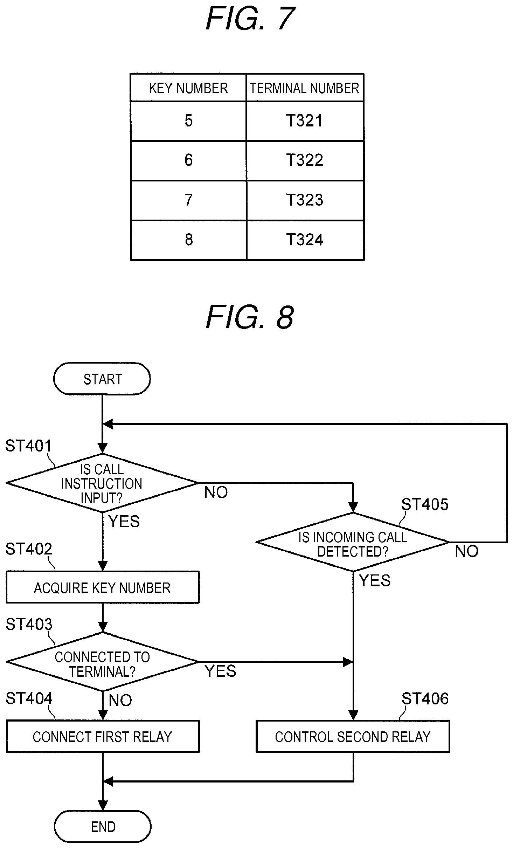

As shown in FIG. 7, connection destination storage 306 stores the key number of lobby interphone 100 allocated to each room monitor 200 and the terminal number of the room monitor connection terminal in association with each other.

Calling controller 307 outputs a calling instruction signal to calling signal generator 308 at the timing of calling.

When receiving the calling instruction signal, calling signal generator 308 transmits the calling signal to connected room monitor 200 by connecting the switch and short-circuits the DC voltage between the two wires (for example, 0 V).

First relay 309 switches connection destinations under the control of state controller 305. At the time of the initial setting, first relay 309 is connected to AM signal identifier for incoming calls 301 (<0> side in FIG. 6).

Second relay 310 switches connection/disconnection under the control of state controller 305. At the time of the initial setting, second relay 310 is disconnected.

Third relay 311 switches connection/disconnection under the control of state controller 305. At the time of the initial setting, third relay 311 is disconnected.

Each DIP switch 312 is set to correspond to the key number of lobby interphone 100 corresponding to room monitor 200 of a connection destination of third relay 311 to be connected.

In distributor 300, the AC voltage of the commercial power supply is converted into a constant DC voltage (DC 24 V) by the AC adapter and supplied to each unit. However, in each distributor 300, a DC voltage (for example, DC 24 V) may be input from distributor 300 at the preceding stage.

The analog audio data, the AM control signal, the FM uplink audio signal, the FM downlink audio signal, and the FM video signal are transmitted in mutually different frequency bands.

### <Relay Control of Lobby Interphone>

Next, details of the relay control by relay controller 110 of lobby interphone 100 will be described with reference to FIG. 8. At the time of the initial setting, first relay 115 and second relay 116 are disconnected.

In a case where a signal indicating a key number and a call instruction signal are input (ST 401: YES), relay controller 110 acquires the terminal number corresponding to the key number of the input signal from a storage table (FIG. 4) of communication destination storage 112 (ST 402) and checks whether or not room monitor 200 of the communicating counterpart is connected to the terminal of lobby interphone 100 (own device) (ST 403).

In a case where the terminal number corresponding to the key number of the input signal is T131, relay controller 110 determines that room monitor 200 of the communicating counterpart is connected via distributor 300 (ST 403: NO) and connects first relay 115 (ST 404). For example, in the example of FIG. 4, when the key number is "6", relay controller 110 connects first relay 115. As a result, it is possible to open a communication path between lobby interphone 100 and distributor 300-1.

On the other hand, in a case where the terminal number corresponding to the key number of the input signal is any one of T121, T122, T123, and T124, relay controller 110 determines that room monitor 200 of the communicating counterpart is directly connected without going through distributor 300 (ST 403: YES) and connects second relay 116 to the terminal connected to room monitor 200 of the communicating counterpart (ST 406). For example, in the example of FIG. 4, when the key number is "2", relay controller 110 connects second relay 116 to terminal T122. As a result, it is possible to open a communication path between room monitor 200 of a connection destination and lobby interphone 100.

In addition, in a case where an incoming call detection signal is input from incoming call detector 109 (ST 401: NO, ST 405: YES), relay controller 110 connects second relay 116 to the terminal of the wire that has detected the incoming monitor (ST 406). As a result, it is possible to open a communication path between room monitor 200 that has transmitted a monitor notification and lobby interphone 100.

In a case where neither the call instruction signal nor the incoming detection signal is input (ST 401: NO, ST 405: NO), relay controller 110 does not control first relay 115 and second relay 116 and maintains the initial setting state.

### <Relay Control of distributor>

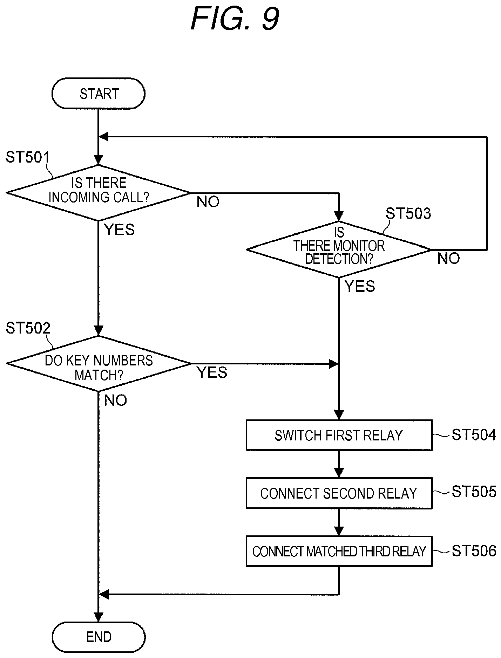

Next, details of relay control by state controller 305 of distributor 300 will be described with reference to FIG. 9. At the time of the initial setting, first relay 309 is connected to AM signal identifier for incoming calls 301 (<0> side in FIG. 6), and second relay 310 and third relay 311 are disconnected.

In a case where an incoming call is received from lobby interphone 100 or distributor 300 at the preceding stage to AM signal identifier for incoming calls 301 and a signal indicating a key number is input from the AM signal identifier for incoming calls 301 (ST 501: YES), state controller 305 determines whether or not the key number matches one of the key numbers of room monitor 200 stored in connection destination storage 306 (ST 502).

In a case where the key numbers do not match (ST 502: NO), state controller 305 determines that room monitor 200 of the communicating counterpart is connected via another distributor 300 at the subsequent stage and maintains the state of first relay 309, second relay 310, and third relay 311.

On the other hand, in a case where the key numbers match (ST 502: YES), state controller 305 determines that room monitor 200 of the communicating counterpart is connected to the own device, switches the connection destination of first relay 309 to third relay 311 (<1> side in FIG. 6) (ST 504), connects second relay 310 (ST 505), and connects third relay 311 to the terminal corresponding to the matched key number (ST 506). For example, in the example of FIG. 7, in a case where the matched key number is "6", state controller 305 connects third relay 311 to terminal T 322. As a result, it is possible to open a communication path between room monitor 200 of the communicating counterpart and lobby interphone 100 via distributor 300.

In addition, in a case where a monitor detection signal is input from monitor detector 304 (ST 501: NO, ST 503: YES), state controller 305 switches the connection destination of first relay 309 to third relay 311 (<1> side in FIG. 6) (ST 504), connects second relay 310 (ST 505), and connects third relay 311 to the terminal of the wiring that has detected the monitor request (ST 506).

In a case where neither the incoming signal nor the monitor request signal is input (ST 501: NO, ST 503: NO), state controller 305 maintains the initial setting state without controlling first relay 309, second relay 310, and third relay 311.

### <Effects>

As described above, in the present embodiment, in a case where distributor 300 connected to the plurality of room monitors 200 via the star-type wiring receives a signal including the key number allocated to the room monitor 200 of the connection destination from lobby interphone 100 or distributor 300 at the preceding stage, it is determined whether or not the key number matches any one of the key numbers stored in connection destination storage 306, and in a case where the key numbers match, a communication path with room monitor 200 is opened. As a result, a hybrid-type wiring that combines the star-type wiring and the daisy chain type wiring becomes possible, thus in the doorphone system for the apartment house, it is possible to select optimum device arrangement according to the state of the existing wirings.

In the present disclosure, the type, placement, the number, and the like of the members are not limited to the above-described embodiments, and the constituent elements thereof may be appropriately replaced with ones having the same effect and effect and may be appropriately changed without departing from the gist of the invention.

For example, in the present disclosure, the number of room monitors 200 connected to lobby interphone 100 and the number of room monitors 200 connected to distributor 300 are not particularly limited.

In addition, in the present disclosure, lobby interphone 100 does not necessarily have to be connected to room monitor 200. In this case, terminals T121, T122, T123, T124, incoming call detector 109, and second relay 116 are unnecessary.

In addition, in the present disclosure, lobby interphone 100 may transmit an AM incoming signal including the key number of room monitor 200 of the communicating counterpart and the number of distributor 300 connected thereto, and each distributor 300 may determine whether or not the number of distributor 300 included in the AM incoming signal is that of the own device to perform relay control.

Specifically, in lobby interphone 100, communication destination storage 112 further stores the key numbers of room monitors 200 and the numbers of the distributors 300 connected to room monitors 200 in association with each other. Then, AM communication controller 111 transmits an AM incoming signal including the key number of room monitor 200 of the communicating counterpart and the number of distributor 300 connected thereto.

Then, in distributor 300, in a case where there is an incoming call from lobby interphone 100 or distributor 300 at the preceding stage, state controller 305 determines whether or not the number of distributor 300 included in the AM incoming signal matches that of the own device. In a case where the number of distributor 300 does not have a match, state controller 305 maintains the states of first relay 309, second relay 310, and third relay 311. On the other hand, in a case where the number of distributor 300 has a match, state controller 305 switches the connection destination of first relay 309 to third relay 311 (<1> side in FIG. 6), connects second relay 310, and connects third relay 311 to the terminal corresponding to the key number.

The present disclosure is suitable for use in a doorphone system for an apartment house.

## Claims

1. A lobby interphone (100) of a doorphone system (1) including
the lobby interphone (100) for a visitor to an apartment house to call residents of visiting places,
room monitors (200) for the residents to respond by receiving a call from the visitor, and
distributors (300) that relay between the lobby interphone (100) and the room monitors (200),
in which the lobby interphone (100) is connected to a plurality of the room monitors (200) with star-type wiring via two-wire cables and connected to one of the distributors (300) via a two-wire cable,
the distributors (300) are connected to each other with daisy chain type wiring via two-wire cables, and
each of the distributors (300) is connected to the room monitors (200) via two-wire cables,
the lobby interphone (100) comprising:
a first terminal (T131) that is connected to one of the distributors (300);
**characterized in that** the lobby interphone (100) further comprises:
a plurality of second terminals (T121, T122, T123, T124) that are connected to the plurality of room monitors (200) with star-type wiring;
a storage (112) that associates key numbers allocated to the room monitors (200) connected to the distributors (300) with a number of the first terminal (T131) and stores the key numbers allocated to the room monitors (200) connected to each of the second terminals (T121, T122, T123, T124) in association with numbers of each of the second terminals (T121, T122, T123, T124);
a first relay unit (115) that opens and closes a communication path with the distributors (300) via the first terminal (T131);
a second relay unit (116) that opens and closes a communication path with the room monitors (200) via any one of the second terminals (T121, T122, T123, T124); and
a controller (110) that controls the first relay unit (115) and the second relay unit (116) so that a communication path with the distributor (300) or the room monitor (200) connected to a terminal (T121, T122, T123, T124) of which the number is associated with a key number included in an input signal is opened.

2. A doorphone system (1) comprising:
a lobby interphone (100) for a visitor to an apartment house to call residents of visiting places;
room monitors (200) for the residents to respond by receiving a call from the visitor; and
distributors (300) that relay between the lobby interphone (100) and the room monitors (200),
wherein the lobby interphone (100) is connected to a plurality of the room monitors (200) with star-type wiring via two-wire cables and connected to one of the distributors (300) via a two-wire cable,
the distributors (300) are connected to each other with daisy chain type wiring via a two-wire cable,
**characterized in that**
the lobby interphone (100) stores key numbers allocated to room monitors (200) connected to the distributors (300) and a key number allocated to a room monitor (200) connected to an own device (100), respectively,
a communication path with the room monitor (300) is opened in a case where a room monitor (300) of a key number included in an input signal is connected to the own device (100), and
a communication path with the distributor (300) is opened in a case where the room monitor (200) of the key number included in the input signal is connected to the distributor (300).

3. A communication method of a lobby interphone (100) of a doorphone system (1) including
a lobby interphone (100) for a visitor to an apartment house to call residents of visiting places,
room monitors (200) for the residents to respond by receiving a call from the visitor, and
distributors (300) that relay between the lobby interphone (100) and the room monitors (200),
in which the lobby interphone (100) is connected to a plurality of the room monitors (200) with star-type wiring via two-wire cables and connected to one of the distributors (300) via a two-wire cable,
the distributors (300) are connected to each other with daisy chain type wiring via two-wire cables, and
each of the distributors (300) is connected to the room monitors (200) via two-wire cables,
the method being **characterized by** comprising:
determining (ST402) whether a room monitor (200) with a key number included in an input signal is connected to the distributor or to an own device (100);
opening (ST406) a communication path with the room monitor (200) in a case where a room monitor (200) with the key number included in the input signal is connected to the own device (100); and
opening (ST404) a communication path with the distributor (300) in a case where the room monitor (200) with the key number included in an input signal is connected to the distributor (300).

## Patentansprüche

1. Lobby-Interphone (100) eines Türtelefonsystems (1) mit
dem Lobby-Interphone (100) für einen Besucher in einem Apartmenthaus zum Anrufen von Bewohnern von Besuchsplätzen,
Zimmer-Monitoren (200) für die Bewohner zum Antworten durch Empfangen eines Anrufs von dem Besucher und
Verteilern (300), die zwischen dem Lobby-Interphone (100) und den Zimmer-Monitoren (200) weiterleiten,
wobei das Lobby-Interphone (100) mit mehreren der Zimmer-Monitoren (200) mit einer Verdrahtung des Sterntyps über Zwei-Draht-Kabel verbunden ist und mit einem der Verteiler (300) über ein Zwei-Draht-Kabel verbunden ist,
die Verteiler (300) miteinander in einer Daisy-Chain-artigen Verdrahtung über Zwei-Draht-Kabel verbunden sind, und
jeder der Verteiler (300) mit den Zimmer-Monitoren (200) über Zwei-Draht-Kabel verbunden ist,
wobei das Lobby-I nterphone (100) umfasst:
einen ersten Anschluss (T131), der mit einem der Verteiler (300) verbunden ist,
**gekennzeichnet dadurch, dass** das Lobby-Interphone (100) ferner umfasst:
mehrere zweite Anschlüsse (T121, T122, T123, T124), die mit den mehreren Zimmer-Monitoren (200) in einer Verdrahtung des Sterntyps verbunden sind,
einen Speicher (112), der Schlüsselnummern, die den Zimmermonitoren (200) zugewiesen sind, die mit den Verteilern (300) verbunden sind, mit einer Nummer des ersten Anschlusses (131) assoziiert und die Schlüsselnummern, die den Zimmer-Monitoren (200) zugewiesen sind, die mit jedem der zweiten Anschlüsse (T121, T122, T123, T124) verbunden sind, in Verbindung mit Nummer eines jeden der zweiten Anschlüsse (T121, T122, T123, T124) speichert,
eine erste Weiterleitungseinheit (115) die einen Kommunikationspfad mit den Verteilern (300) über den ersten Anschluss (T131) öffnet und schließt,
eine zweite Weiterleitungseinheit (116), die einen Kommunikationspfad mit den Zimmer-Monitoren (200) über irgendeinen der zweiten Anschlüsse (T121, T122, T123, T124) öffnet und schließt, und
eine Steuereinheit (110), die die erste Weiterleitungseinheit (115) und die zweite Weiterleitungseinheit (116) steuert, so dass ein Kommunikationspfad mit dem Verteiler (300) oder dem Zimmer-Monitor (200), der mit einem Anschluss (T121, T122, T123, T124) verbunden ist, dessen Nummer mit einer Schlüsselnummer assoziiert ist, die in einem Eingabesignal enthalten ist, geöffnet wird.

2. Türtelefonsystem (1) mit
einem Lobby-Interphone (100) für einen Besucher in einem Apartmenthaus zum Anrufen von Bewohnern von Besuchsplätzen,
Zimmer-Monitoren (200) für die Bewohner zum Antworten durch Empfangen eines Anrufs von dem Besucher und
Verteilern (300), die zwischen dem Lobby-Interphone (100) und den Zimmer-Monitoren (200) weiterleiten,
wobei das Lobby-Interphone (100) mit mehreren der Zimmer-Monitoren (200) mit einer Verdrahtung des Sterntyps über Zwei-Draht-Kabel verbunden ist und mit einem der Verteiler (300) über ein Zwei-Draht-Kabel verbunden ist,
die Verteiler (300) miteinander in einer Daisy-Chain-artigen Verdrahtung über ein Zwei-Draht-Kabel verbunden sind,
**gekennzeichnet dadurch, dass**
das Lobby-Interphone (100) jeweils Schlüsselnummern, die den Zimmermonitoren (200), die mit den Verteilern (300) verbunden sind, zugewiesen sind, und eine Schlüsselnummer, die einem Zimmer-Monitor (200) zugewiesen ist, der mit einer eigenen Vorrichtung (100) verbunden ist, speichert,
ein Kommunikationspfad mit dem Zimmer-Monitor (200) geöffnet wird, im Fall, dass ein Zimmer-Monitor (200) einer Schlüsselnummer, die in einem Eingangssignal enthalten ist, mit der eigenen Vorrichtung (100) verbunden ist, und
ein Kommunikationspfad mit dem Verteiler (300) geöffnet wird, im Fall, dass der Zimmer-Monitor (200) der Schlüsselnummer, die in dem Eingangssignal enthalten ist, mit dem Verteiler (300) verbunden ist.

3. Kommunikationsverfahren eines Lobby-Interphones (100) eines Türtelefonsystems (1) mit
einem Lobby-Interphone (100) für einen Besucher in einem Apartmenthaus zum Anrufen von Bewohnern von Besuchsplätzen,
Zimmer-Monitoren (200) für die Bewohner zum Antworten durch Empfangen eines Anrufs von dem Besucher und
Verteilern (300), die zwischen dem Lobby-Interphone (100) und den Zimmer-Monitoren (200) weiterleiten,
wobei das Lobby-Interphone (100) mit mehreren der Zimmer-Monitoren (200) mit einer Verdrahtung des Sterntyps über Zwei-Draht-Kabel verbunden ist und mit einem der Verteiler (300) über ein Zwei-Draht-Kabel verbunden ist,
die Verteiler (300) miteinander in einer Daisy-Chain-artigen Verdrahtung über Zwei-Draht-Kabel verbunden sind, und
jeder der Verteiler (300) mit den Zimmer-Monitoren (200) über Zwei-Draht-Kabel verbunden ist,
wobei das Verfahren **dadurch gekennzeichnet ist, dass** es umfasst:
Bestimmen (ST402), ob ein Zimmer-Monitor (200) mit einer Schlüsselnummer, die in einem Eingangssignal enthalten ist, mit dem Verteiler oder einer eigenen Vorrichtung (100) verbunden ist,
Öffnen (ST406) eines Kommunikationspfads mit dem Zimmer-Monitor (200) in einem Fall, dass ein Zimmer-Monitor (200) mit der Schlüsselnummer, die in dem Eingangssignal enthalten ist, mit der eigenen Vorrichtung (100) verbunden ist, und
Öffnen (ST404) eines Kommunikationspfads mit dem Verteiler (300) in einem Fall, dass der Zimmer-Monitor (200) mit der Schlüsselnummer, die in einem Eingangssignal enthalten ist, mit dem Verteiler (300) verbunden ist.

## Revendications

1. Interphone de hall (100) d'un système de téléphone de porte (1) comprenant
l'interphone de hall (100) pour un visiteur d'un immeuble de studios afin d'appeler des résidents de lieux de visite,
des moniteurs de pièce (200) pour les résidents afin de répondre en recevant un appel du visiteur, et
des distributeurs (300) qui relaient entre l'interphone de hall (100) et les moniteurs de pièce (200),
dans lequel l'interphone de hall (100) est connecté à une pluralité de moniteurs de pièce (200) par un câblage de type en étoile via des câbles à deux fils, et connecté à l'un des distributeurs (300) via un câble à deux fils,
les distributeurs (300) sont connectés les uns aux autres par un câblage de type en guirlande via des câbles à deux fils, et
chacun des distributeurs (300) est connecté aux moniteurs de pièce (200) par des câbles à deux fils,
ledit interphone de hall (100) comprenant:
une première borne (T131) qui est connectée à l'un des distributeurs (300),
**caractérisé par le fait que** l'interphone de hall (100) comprend en outre:
une pluralité de deuxièmes bornes (T121, T122, T123, T124) qui sont connectées à la pluralité de moniteurs de pièce (200) par un câblage de type en étoile,
une mémoire (112) qui associe des numéros de clé attribués aux moniteurs de pièce (200) connectés aux distributeurs (300) à un numéro de la première borne (T131) et stocke les numéros de clé attribués aux moniteurs de pièce (200) connectés à chacune des deuxièmes bornes (T121, T122, T123, T124), en association avec des numéros de chacune des deuxièmes bornes (T121, T122, T123, T124),
une première unité de relais (115) qui ouvre et ferme un chemin de communication avec les distributeurs (300) via la première borne (T131),
une deuxième unité de relais (116) qui ouvre et ferme un chemin de communication avec les moniteurs de pièce (200) via l'une quelconque des deuxièmes bornes (T121, T122, T123, T124), et
une unité de commande (110) qui commande la première unité de relais (115) et la deuxième unité de relais (116) de sorte qu'un chemin de communication avec le distributeur (300) ou le moniteur de pièce (200) connecté à une borne (T121, T122, T123, T124) dont le numéro est associé à un numéro de clé inclus dans un signal d'entrée est ouvert.

2. Système de téléphone de porte (1) comprenant:
un interphone de hall (100) pour un visiteur d'un immeuble de studios afin d'appeler des résidents de lieux de visite,
des moniteurs de pièce (200) pour les résidents afin de répondre en recevant un appel du visiteur, et
des distributeurs (300) qui relaient entre l'interphone de hall (100) et les moniteurs de pièce (200),
dans lequel l'interphone de hall (100) est connecté à une pluralité de moniteurs de pièce (200) par un câblage de type en étoile via des câbles à deux fils, et connecté à l'un des distributeurs (300) via un câble à deux fils,
les distributeurs (300) sont connectés les uns aux autres par un câblage de type en guirlande via un câble à deux fils,
**caractérisé par le fait que**
l'interphone de hall (100) stocke des numéros de clé attribués aux moniteurs de pièce (200) connectés aux distributeurs (300) et un numéro de clé attribué à un moniteur de pièce (200) connecté à un propre dispositif (100), respectivement,
un chemin de communication avec le moniteur de pièce (200) est ouvert dans un cas où un moniteur de pièce (200) d'un numéro de clé inclus dans un signal d'entrée est connecté audit propre dispositif (100), et
un chemin de communication avec le distributeur (300) est ouvert dans un cas où le moniteur de pièce (200) du numéro de clé inclus dans le signal d'entrée est connecté au distributeur (300).

3. Procédé de communication d'un interphone de hall (100) d'un système de téléphone de porte (1), comprenant
un interphone de hall (100) pour un visiteur d'un immeuble de studios afin d'appeler des résidents de lieux de visite,
des moniteurs de pièce (200) pour les résidents afin de répondre en recevant un appel du visiteur, et
des distributeurs (300) qui relaient entre l'interphone de hall (100) et les moniteurs de pièce (200),
dans lequel l'interphone de hall (100) est connecté à une pluralité de moniteurs de pièce (200) par un câblage de type en étoile via des câbles à deux fils, et connecté à l'un des distributeurs (300) via un câble à deux fils,
les distributeurs (300) sont connectés les uns aux autres par un câblage de type en guirlande via des câbles à deux fils, et
chacun des distributeurs (300) est connecté aux moniteurs de pièce (200) par des câbles à deux fils,
le procédé étant **caractérisé par le fait qu'**il comprend:
déterminer (ST402) si un moniteur de pièce (200) avec un numéro de clé inclus dans un signal d'entrée est connecté au distributeur ou à un propre dispositif (100),
ouvrir (ST406) un chemin de communication avec le moniteur de pièce (200) dans un cas où un moniteur de pièce (200) avec le numéro de clé inclus dans le signal d'entrée est connecté audit propre dispositif (100), et
ouvrir (ST404) un chemin de communication avec le distributeur (300) dans un cas où le moniteur de pièce (200) avec le numéro de clé inclus dans un signal d'entrée est connecté au distributeur (300).
